# EUROPEAN PATENT APPLICATION

(11) **EP 4 506 767 A1**
(43) Date of publication of application: **12.02.2025**
(21) Application number: 23190404.6
(22) Date of filing: 08.08.2023
(51) Int. Cl.: G05B 19/418

(54) **MOVING MOLD SYSTEMS AND METHODS IN WIND TURBINE BLADE MANUFACTURE**

(71) Applicant: LM Wind Power A/S, 6000 Kolding (DK)
(72) Inventor: BELOTE, Michael, Grand Forks, 58201 (US)
(74) Representative: Bardehle Pagenberg S.L.

(57) **Abstract**

The present disclosure relates to a computer-implemented method (100) for controlling a manufacturing method of a wind turbine blade. The method comprises receiving first data (102) related to one or more first operations carried out in a first workstation obtained by one or more first sensors arranged with the first workstation; receiving second data (104) related to one or more second operations carried out in a second workstation obtained by one or more second sensors arranged with the second workstation; analyzing the first and second data (106) to determine a quality and/or a cycle time of one or more of the first and second operations; and determining (108) a deviation in the quality and/or cycle time of the one or more of the first and second operations.

## Description

### FIELD

The present disclosure relates to wind turbine blades and methods for manufacturing wind turbine blades and sections of wind turbine blades. The present disclosure particularly relates to methods and systems for use in manufacturing of wind turbine blades using a moving mold system.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

It is known to manufacture wind turbine blades by molding and assembling each of the wind turbine blades at the same workshop. The wind turbine blade may then be moved to another workshop, typically a finishing workshop, where the wind turbine blade is cut, trimmed, painted and the final fittings are mounted on the wind turbine blade.

The wind turbine blades are often made of fiber-reinforced polymer and are usually manufactured as shell parts in molds, where the top side and the bottom side of the blade profile (typically the pressure side and suction side, respectively) are manufactured separately by arranging glass fiber mats in each of the two mold parts and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mold parts about a hinge line for closure and opening of the molds.

The shell parts for the wind turbine blade are typically manufactured as fiber composite structures by means of VARTM (vacuum assisted resin transfer molding). In this process, liquid polymer, also called resin, is supplied into a mold cavity, in which fiber reinforcement material (e.g. woven or unwoven fibers, fiber mats, rovings, or other) previously has been inserted. A vacuum is generated in the mold cavity, hereby drawing in the resin. The resin can be thermoset plastic or thermoplastics. A resilient vacuum bag may be placed on top of the fiber reinforcement material. So-called distribution layers or distribution tubes, also called inlet channels, may be used between the vacuum bag and the fiber reinforcement material in order to obtain as sound and efficient a distribution of polymer resin as possible. In most cases, the polymer applied is polyester or epoxy, and the fiber reinforcement is most often based on glass fibers and/or carbon fibers.

However, as the demand for wind turbines is rapidly increasing, it is found increasingly difficult to scale the conventional manufacturing method to accommodate the demand for several reasons: Firstly, the conventional manufacturing method requires that all the materials required for manufacturing a wind turbine blade, e.g. resin and fiber reinforcement material, be transported to every workshop. This is logistically demanding. Secondly, every workshop has to be equipped with tools that are necessary for every single manufacturing step in the process, which results in a significant overhead. Additionally, the conventional manufacturing method requires a mold in every single workshop, which is expensive, since production and maintenance of molds are time consuming and thus expensive. Furthermore, the conventional manufacturing method occupies a lot of space, and since the workers at each workshop have to perform a variety of manufacturing steps, there is a risk that the quality of the manufactured wind turbine blades may suffer.

So far, wind turbine production still relies on the above-mentioned manufacturing methods involving highly skilled human labor. EP2403708 proposes an alternative manufacturing method and an alternative manufacturing line involving "moving molds". In this prior art document, a manufacturing line is disclosed, wherein wind turbine blades are formed in a number of molds, each of the molds comprising at least a first mold part comprising a first mold cavity. The manufacturing line further comprises a number of separate workstations, where separate manufacturing steps are carried out. And the method comprises the following steps: a) arranging the fiber reinforcement material in a first mold cavity of a first mold part at a first work station, b) moving the first mold part with the fiber reinforcement materials by use of conveying means to a second work station having a different position than the first work station, and c) supplying a curable matrix material into the first mold cavity of the first mold part at the second work station. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method furthermore provides that each workstation can be equipped with specialized and advanced equipment that is dedicated to the manufacturing step carried out at each workstation, as the method reduces the required number of work stations. Additionally, each workstation can be manned with specialized workers that are skilled and trained in the manufacturing step carried out at that particular workstation. However, some of the workstations can also be automated, e.g. by using robots, such that fewer workers are needed. Automation is also expected to additionally improve the quality of the manufactured wind turbine blades.

The conveying means may comprise at least four wheels and/or rollers mounted on each of the number of molds, whereby the molds can easily be moved. The conveying means may also comprise rails or tracks on which the molds can be transported.

According to one example in the prior art, the method comprises the following step: d) moving the first mold part, while the matrix material is curing, by conveying means from the second workstation to a third workstation having a different position than the first and the second workstation. Hereby, the method reduces the manufacturing time, as the first mold is being moved from the second workstation to the third workstation while the matrix material that was infused in step b) is still curing.

Although EP 2 403 708 discloses methods and systems which have important advantages over other prior art systems, the moving mold system therein disclosed also presents specific challenges.

One particular challenge is related to "production line-balancing". Line balancing may herein be regarded as a production strategy for improving productivity and cost-efficiency. An optimal time frame may be designated for the production of a wind turbine blade. Tasks may then be equally distributed among workers and workstations to ensure that tasks and operations are carried out within the specified time frame. That is, the tasks and processes are divided between workstations in such a way that they occupy substantially the same amount of time, i.e. the overall "cycle time" at each workstation is substantially the same. The particular challenge herein lies that very large molds are moved between workstations. Because of the size of the molds, there can be no buffer of molds at different workstations. This means that a delay in a single work product (a mold) at a single workstation can delay the entire production process, since the molds arranged upstream from the workstation cannot be moved forwards to the next workstation.

### SUMMARY

In an aspect of the present disclosure, a computer-implemented method for controlling a manufacturing method of a wind turbine blade is provided. The method comprises receiving first data related to one or more first operations carried out in a first workstation obtained by one or more first sensors arranged with the first workstation; receiving second data related to one or more second operations carried out in a second workstation obtained by one or more second sensors arranged with the second workstation; analyzing the first and second data to determine a quality and/or a cycle time of one or more of the first and second operations; and determining a deviation in the quality and/or cycle time of the one or more of the first and second operations.

According to this aspect, operations from different workstations of a production line of wind turbine blades may be monitored and coordinated. Continuous line balancing in the production of wind turbine blades may be achieved.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations.

After a blade (shell) has undergone the operations assigned to a specific workstation, the mold with shell may be discharged from the workstation, e.g. they may be conveyed to the next workstation. Each of the workstations may include one or more production tools. A workstation may also be regarded as a "cell" of a production line.

As used throughout the present disclosure, "production tools" may be regarded as the automated machines that form part of a workstation. Production tools may include particularly industrial robots. An industrial robot is a robot system used for manufacturing. Industrial robots are automated, programmable, and capable of movement on three or more axes. The production tools may include industrial robots dedicated to e.g. supplying materials, positioning materials, spraying, heating/cooling and other. Production tools may be controlled by a suitable computer system, e.g. one or more Programmable Logic Circuits (PLC).

"Operations" carried out at a workstation may be regarded as individual manufacturing steps. In particular, operations may relate to the supply of materials into a mold cavity.

As used throughout the present disclosure, a "production line", or "manufacturing line" may be regarded as a group of workstations which are generally arranged in the same geographical location i.e. at a manufacturing site such as a factory. The production line may in particular include an assembly of two half shells and the end product of the production line may be a finished blade, or almost finished blade (which only requires minor finishing operations).

In a further aspect of the present disclosure, a computer program is provided. The computer program comprises instructions and when executed by a computer, the computer carries out any of the examples of the aforementioned method for controlling a manufacturing method of a wind turbine blade.

In another aspect of the disclosure, a computer-readable medium is provided. The computer-readable medium comprises instructions which when executed by a computer cause the computer to carry out the method for controlling a manufacturing method of a wind turbine blade.

In yet a further aspect of the present disclosure, a data processing system is provided. The data processing system comprises a processor configured to perform any example of the method for controlling a manufacturing method of a wind turbine blade.

In another aspect of the disclosure, a method for manufacturing a wind turbine blade is provided. The method comprises providing a first mold having a first mold cavity at a first workstation, carrying out a plurality of first operations using one or more first tools at the first workstation to introduce first materials into the first mold cavity for manufacturing a first half shell of the wind turbine blade and moving the first mold to a second workstation. The method further comprises carrying out a plurality of second operations using one or more second tools at the second workstation to introduce second materials into the first mold cavity. The method further comprises one or more first sensors at the first workstation measuring first data indicative of the one or more first operations and one or more second sensors at the second workstation measuring second data indicative of the one or more second operations. The first and second data are sent to a central control system and the central control system determines a deviation in the quality and/or cycle time of one or more of the first and second operations.

In yet a further aspect of the disclosure, a production line for manufacturing at least a part of a wind turbine blade is provided. The production line comprises a first mold having a first mold cavity and a first workstation including one or more first tools for introducing materials into the first mold cavity and further including one or more sensors for measuring first operations carried out in the first workstation. The production line further comprises a second workstation including one or more second tools for introducing materials into the first mold cavity and further including one or more second sensors for measuring second operations carried out in the second workstation. The production line also comprises a conveyor system for moving the first mold from the first workstation to the second workstation and a central control system for carrying out a method for controlling a manufacturing method of a wind turbine blade according to the present disclosure.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 2C is a schematic diagram illustrating a mold system for molding a blade shell of a wind turbine blade;
Figure 3 shows a flow chart of a computer-implemented method for controlling a manufacturing method of a wind turbine blade;
Figure 4 shows a flow chart of a method for manufacturing a wind turbine blade; and
Figure 5A schematically illustrates an example of a mold at a gelcoat station;
Figure 5B schematically illustrates an example of a mold at a fiber layup station;
Figure 5C schematically illustrates an example of a mold at a resin infusion station;
Figure 5D schematically illustrates an example of a mold at a closing station; and
Figure 6 schematically illustrates an example of a production line for manufacturing at least a part of a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

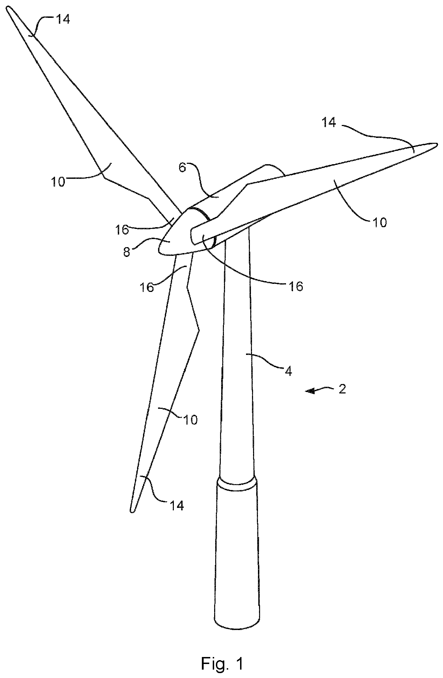

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

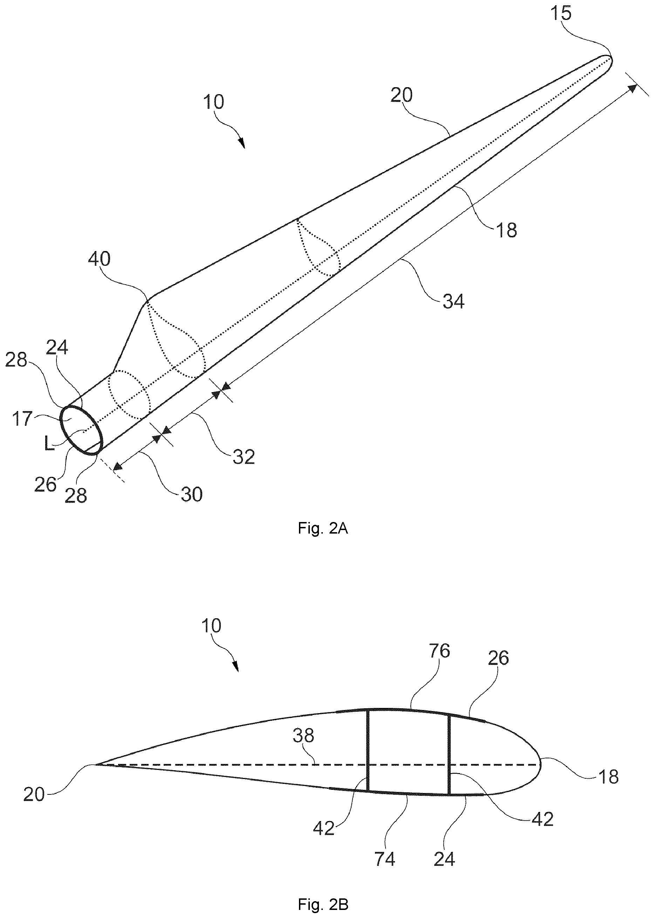

Fig. 2A shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

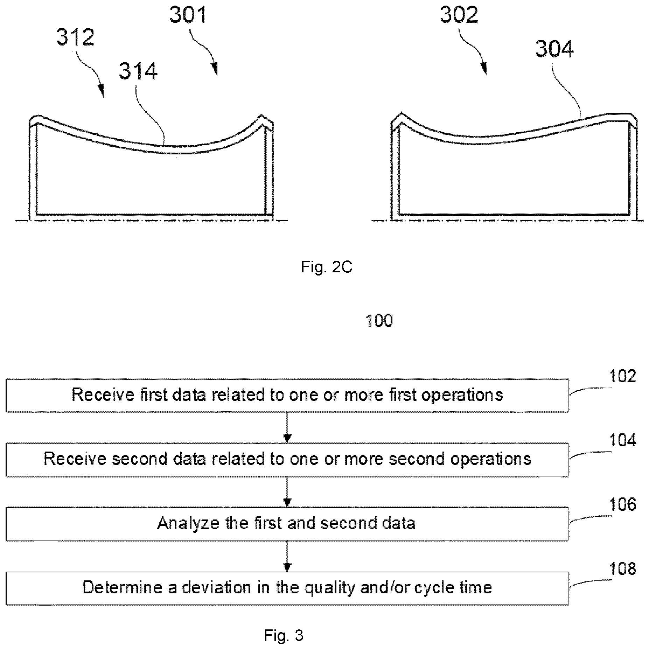

Fig. 2C is a schematic diagram illustrating an example of a mold system for molding a blade shell of a wind turbine blade. The mold system 301 comprises a first mold 302 and a second mold 312. The first mold 302 is configured for manufacturing a first blade shell part of a wind turbine blade, such as an upwind shell part of the wind turbine blade (forming the pressure side). The second mold 312 is configured for manufacturing a second blade shell part of the wind turbine blade, such as a downwind shell part of the wind turbine blade (forming the suction side). Surfaces 304 and 314 are mold surfaces for depositing fibers.

Figure 3 is a flowchart of a computer-implemented method 100 for controlling a manufacturing method of a wind turbine blade according to the present disclosure. The manufacturing method in particular relates to manufacturing methods involving moving molds. The method 100 comprises, at block 102, receiving first data related to one or more first operations carried out in a first workstation obtained by one or more first sensors arranged with the first workstation. The method comprises, at block 104, receiving second data related to one or more second operations carried out in a second workstation obtained by one or more second sensors arranged with the second workstation. At block 106, the method comprises analyzing the first and second data to determine a quality and/or a cycle time of one or more of the first and second operations. The method comprises, at block 108, determining a deviation in the quality and/or cycle time of the one or more of the first and second operations.

The method enables monitoring and coordinating operations from different workstations for manufacturing wind turbine blades. A continuously line balanced production of wind turbine blades may be possible.

The different workstations may be equipped with specialized and advanced equipment that is dedicated to the one or more operations or manufacturing steps carried out at the workstation. In addition, each workstation can be manned with specialized workers that are skilled and trained in the operations carried out at that particular workstation.

The first data may include data from first sensors arranged with one or more first tools of the first workstation. The second data may include data from second sensors arranged with one or more second tools of the second workstation. The first or second tools may be regarded as production tools in the sense of the present disclosure, i.e. automated robots or other machines that form part of a workstation which carry out one or more operations in the workstation. The first and second data provide information about the operations being carried out in the workstation. The operations may be operations carried out while manufacturing a wind turbine blade e.g. arranging fiber reinforcement material in the mold.

One of the sensors may be configured to determine the presence of a mold at a workstation e.g. through infrared radiation. This may enable knowing when a mold has arrived at a workstation or when a mold has left the workstation.

In some examples, one of the first sensors may be a sensor configured to determine the presence of a mold at the first workstation and one of the second sensors may be a sensor configured to determine the presence of the mold at the second workstation. The flow of the molds from workstation to workstation may be controlled and the movement of molds from workstation to workstation may be coordinated.

The computer-implemented method may further comprise estimating an overall cycle time of the first workstation, and/or an overall cycle time of the second workstation on the basis of the received first and second data from the sensors at the workstations. The estimation of an overall cycle time may enable monitoring whether the operations carried out in the workstations are going according to an expected time frame or schedule. When the estimation of the overall cycle time of a particular workstation e.g. the second workstation is different from the "expected" cycle time, there will be an impact on other workstations e.g. the first workstation.

The method may further comprise sending control signals to one or more of the first tools and/or to one or more of the second tools if a deviation in the quality and/or cycle time of the one or more of the first and second operations is detected. An operation carried out by the first and/or second tools may be adapted to a new condition that has been detected. This may enable balancing the manufacturing method of a wind turbine blade depending on specific conditions of each workstation. The overall cycle time may be maintained even when an unexpected event takes place during production, or the cycle time in another workstation may be adapted to the workstation for which a problem or issue has arisen.

The deviation in the quality and/or cycle time determined may be transmitted e.g. to specialized operators working at a particular workstation, but may also be converted into or result in control signals to the production tools of a workstation to adjust the operations being carried out. In some examples, the method may comprise generating a video signal to a first display capable of reproducing the video signal for providing information regarding progress and/or state of the first and/or second operations.

In further examples, an alert may be generated when a deviation in the quality and/or cycle time of the one or more operations is determined. In some examples, the alert may be an audible warning. The audible warning may trigger a response and operations carried out in one of the workstations may be adapted or modified such that an overall cycle time in the workstations is maintained.

A deviation in the quality may comprise an undesired state in one of the workstations e.g. resin in a mold not properly curing or the incorporation of insufficient gelcoat to a mold. In some examples, a deviation in the quality may be determined using a classification model developed using a supervised machine learning method. I.e. data from different sensors may be collected for a large plurality of processes. The data may be stored, and may be linked with certain quality parameters, including e.g. cycle time, indications of the quality of the finished blade, indications of rework that may have been necessary etc. Based on such a training set, machine learning may be used to derive an algorithm which may subsequently be used to check manufacturing processes.

The first and second workstations may be part of a production line. In some examples, the production line may comprise more than two workstations, e.g. between 2 and 20 workstations, specifically between 4 and 15 workstations. The computer-implemented method may further comprise receiving data related to further operations carried out in one or more of the further workstations e.g. a third and a fourth workstation.

In some examples, the method may further comprise receiving data related to one or more operations carried out in each further workstation of a production line obtained by one or more further sensors arranged in each of the further workstations. The method may also comprise analyzing the further data to determine a quality and/or a cycle time of one or more of the further operations; and determining a deviation in the quality and/or cycle time of the one or more further operations. Operational situations such as delays, quality deviations or other occurring at one of the workstations may be communicated to the workstation directly upstream, and/or the workstation directly downstream, since these may be most directly affected. However, such operational situations may also be communicated to all or almost all upstream workstations. If one mold is retained at a specific workstation, it affects the ability of all the upstream molds for being transported forward. In yet a further example, such operational situations may be communicated to all, or almost all other workstations.

In another aspect of the present disclosure, a computer program may be provided. The computer program may comprise instructions which, when the program is executed by a computer, cause the computer to carry out the method for controlling the manufacturing method of a wind turbine blade which has been disclosed above.

In a further aspect of the disclosure, a computer-readable medium may be provided. The computer-readable medium may comprise instructions which, when executed by a computer, cause the computer to carry out an example of the method for controlling a manufacturing method of a wind turbine blade which has been disclosed above.

In yet another aspect of the present disclosure, a data processing system may be provided. The data processing system may comprise a processor configured to perform an example of the method for controlling a manufacturing method of a wind turbine blade which has been disclosed above.

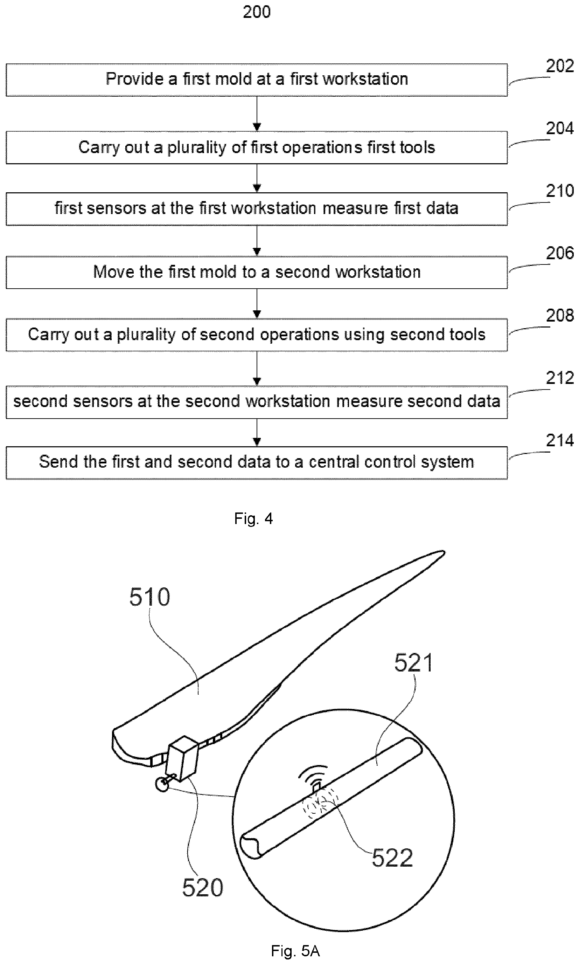

In a further aspect of the present disclosure, a method 200 for manufacturing a wind turbine blade is provided. Figure 4 is a flowchart of the method 200.

The method 200 comprises, at block 202, providing a first mold having a first mold cavity at a first workstation. The method comprises, at block 204, carrying out a plurality of first operations using one or more first tools at the first workstation to introduce first materials into the first mold cavity for manufacturing a first half shell of the wind turbine blade. Further, the method comprises, at block 206, moving the first mold to a second workstation, and, at block 208, carrying out a plurality of second operations using one or more second tools at the second workstation to introduce second materials into the first mold cavity.

Further, the method comprises, at block 210, measuring first data indicative of the one or more operations with one or more first sensors; and measuring, at block 212, second data indicative of the one or more second operations with one or more second sensors. The method comprises sending the first and second data to a central control system, at block 214. The method further comprises, at block 216, that the central control system determines a deviation in the quality and/or cycle time of one or more of the first and second operations.

In a wind turbine moving mold station a problem in a workstation can affect every other workstation. The method enables monitoring the line balance of the molds in a wind turbine moving mold station substantially in real time.

The central control system may estimate an overall cycle time of the first workstation and/or an overall cycle time of the second workstation. A real cycle time of each workstation may therefore be estimated.

In some examples, the central control system may send control signals to one or more of the first tools and/or to one or more of the second tools if a deviation in the quality and/or cycle time of the one or more of the first and second operations is detected. One or more production tools at the first workstation and/or one or more production tools may receive control signals to adapt to or adjust for the deviation. The control signals may be received directly from the central control system in one example. In another example, the control signals from the central control system may be at a "high" level. These control signals may be received by a local controller of the workstation which may convert them into control signals for individual tools. A hierarchical control system can thus be provided.

The method may comprise displaying information regarding progress and/or quality of the first and second operations. In some examples, the information may be displayed in screens. Multiple screens or monitors might be provided throughout a plant. Information can thus be shared between operators at multiple workstations.

In some examples, the workstations may be one of a gelcoat station, a fiber layup station, a resin infusion station and a closing station.

Figure 5A shows an example of a mold 510, comprising a mold cavity, at a gelcoat station. The gelcoat station may be the first workstation in a production line for manufacturing at least part of a wind turbine blade.

Even though a single mold is shown in figure 5A, at the same gelcoat station, two molds may arrive and be processed in parallel: one for the upwind section of the blade, and one for the downwind section of the blade. In an alternative, two separate workstations for gelcoating may be provided. The same principle (the possibility of multiple molds or multiple stations) equally applies to any of the other workstations described herein.

In the gelcoat workstation, a first operation may be applying gelcoat to an inside of the mold cavity. The gelcoat layer may be used to protect the surface of the resulting blade.

As shown in figure 5A, the gelcoat station may comprise a bulk storage container 520 which may be moved along the mold depositing gelcoat inside of the mold cavity. Gelcoat may flow through a pipe 521 which may be directly connected to the bulk storage container 520.

The workstation may comprise one or more sensors measuring data indicative of the process of applying gelcoat to the mold.

In some examples, a video camera may be provided for recording an image of the inside of the mold cavity. In such examples, the image may be used to monitor the amount of gelcoat that is being deposited into the mold cavity and/or the location where it is being deposited. In particular, a change of color from a mold cavity without gelcoat to a mold cavity with gelcoat may be detected.

The images may further be used to determine deviations in the quality of the gelcoat application process or deviations of the cycle time. In some examples, the central control system may adjust the speed of the bulk storage container 520 and the speed of the gelcoat deposition in view of information obtained from the images.

Additionally or alternatively, a flow sensor 522 e.g. a flowmeter may be provided for measuring a flowrate of the gelcoat e.g. inside of the pipe 522. The flow of the gelcoat may therefore be tracked and recorded.

In some examples, upon determination of a deviation in the quality and/or cycle time of the gelcoat operation and/or an operation in a subsequent workstation, the central control system may send a control signal which may lead to a change in the flowrate of the gelcoat e.g. the flowrate may be decreased in order to balance the cycle time of the workstation or to adjust the amount of gelcoat being deposited throughout the mold. Thus, flowrate may be automatically changed, without the need of a human action, and the production line may be balanced in real-time.

In further examples, the central control system may change a hardener ratio of the gelcoat. The composition of the gelcoat flowing through the pipe may be adjusted e.g. such that the drying time of the gelcoat is modified. In some examples, such an adjustment may be based on further sensors, such as humidity or temperature sensors at the first workstation.

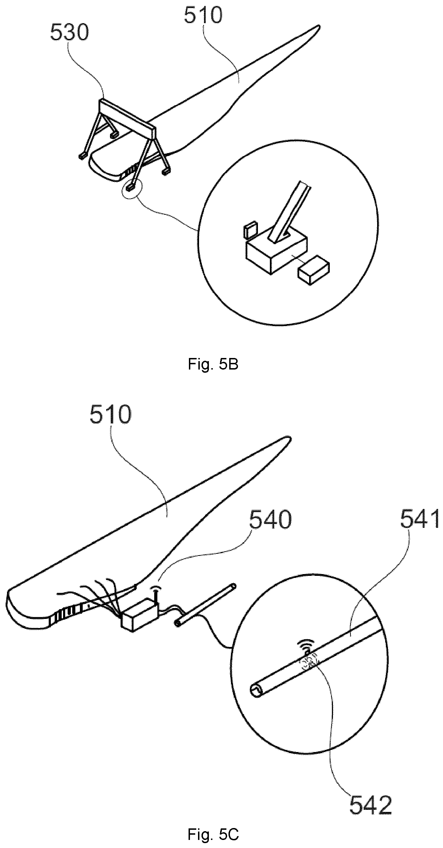

Figure 5B shows an example of a mold 510 at a fiber layup workstation of a production line for manufacturing at least part of a wind turbine blade, which may be arranged downstream from the previously illustrated gelcoat station.

In some examples, the mold 510 may be moved to a fiber layup workstation after gelcoat has been applied to it. In the layup workstation fiber reinforcement material, fibers, may be laid in the mold cavity. The fiber reinforcement material may comprise fibers in any suitable form depending on the blade being manufactured, such as woven or unwoven fibers, rovings, mats, prepregs and preforms. The fibers may be made of any material e.g. glass or carbon and may give strength and stability to the wind turbine blade. The fibers may be laid out in this example by a fiber-laying tool 530 e.g. a gantry. In addition, a plurality of other operations may be carried out in the workstation e.g. manual operations.

The layup workstation may comprise one or more sensors measuring data indicative of the layup operation. In some examples, the one or more sensors may comprise a video camera for imaging the fibers present in the mold cavity.

The images obtained by the video camera may be processed and used to monitor the number of layers laid out in the mold cavity, a parameter which may be conveniently used by the central control system to determine quality deviations of the lay-up process and/or cycle time of the process. As for the gelcoat station, a change in color may be indicative of the deposition of a layer of fiber.

Also, during the layup process, the determination of wrinkles in the mold cavity may be a key aspect to ensure quality of the manufactured wind turbine blade. In further examples, the central control system may be configured to determine wrinkles in the fibers in the mold cavity. Information regarding the quality of the layup process may be displayed e.g. in screens present in the workstation and actions may be taken by specialized workers to remedy the quality of the blade shell. In addition, the central control system may send control signals to other workstations such that the overall production line stays balanced e.g. the cycle time of the previous workstation may be reduced.

In some examples, the fibers may be laid in the mold cavity using a fiber-laying tool 530. The progress of the fiber-laying process may also be derived from the operation of the fiber-laying tool. The lay-up station may comprise one or more sensors which may measure a length of the fibers laid in the mold cavity. Alternatively, the lay-up station may register the movement of the fiber-laying tool 530, e.g. speed or position. The measured data may be sent to the central control system, which may determine whether there is a deviation in any parameter monitored. In some examples, the speed of the process of laying fibers may be modified in order to coordinate the workstation with a following workstation. In this example, the following workstation is a resin infusion station.

Figure 5C shows an example of a mold 510 at a resin infusion station of a production line for manufacturing at least part of a wind turbine blade. Such a resin infusion station may be arranged downstream from the lay-up station of figure 5B.

One of the operations which may be carried out at an infusion station is infusing the fibers laid in the mold cavity with a resin, which may be injected into the mold cavity in order to enhance the structural strength and integrity of the final blade.

The process of VARTM may be used for resin infusion (Vacuum Assisted Resin Transfer Molding). In this process, a vacuum is generated in the mold cavity. A resilient vacuum bag may be placed on top of the fiber reinforcement material. So-called distribution tubes may be used between the vacuum bag and the fiber reinforcement material in order to distribute the polymer resin. In most cases, the polymer applied is polyester or epoxy, and the fiber reinforcement is most often based on glass fibers and/or carbon fibers. The use of the vacuum facilitates resin flow into a fiber layup contained within the mold.

The infusion station may comprise a bulk storage container 540 from which liquid resin may be transferred into the mold. The resin may flow through a pipe 541 connected to the bulk storage container 540.

The infusion station may comprise one or more sensors that may be useful for supervising the operations at this workstation. In some examples, one of the sensors may be a video camera for imaging the resin which is introduced into the mold. The amount and the location of resin injected may therefore be monitored by processing the obtained images. Also in this case, a color change may be used to monitor progress of the resin infusion.

In other examples, one of the sensors may be a flow sensor 542 e.g. a flowmeter for measuring a flow rate of the resin. A deviation in the flow rate of the resin may be detected by the central control system, and the flowrate may be adjusted. In other examples, the flowrate of the resin may be adjusted when a deviation has been detected in another workstation e.g. the infusion process is sped up to restore an overall cycle time.

In other examples, one of the sensors may be a reflectance sensor. A quality of the resin may be determined by determining a reflectance or reflectivity.

Once the fibers laid in the mold cavity have been infused with resin, the resin curates i.e. the resin solidifies. In some examples, a temperature sensor may detect a change in ambient temperature which may affect the curation time of the resin. The central control system may modify a hardener ratio in the resin, such that the cycle time is adjusted.

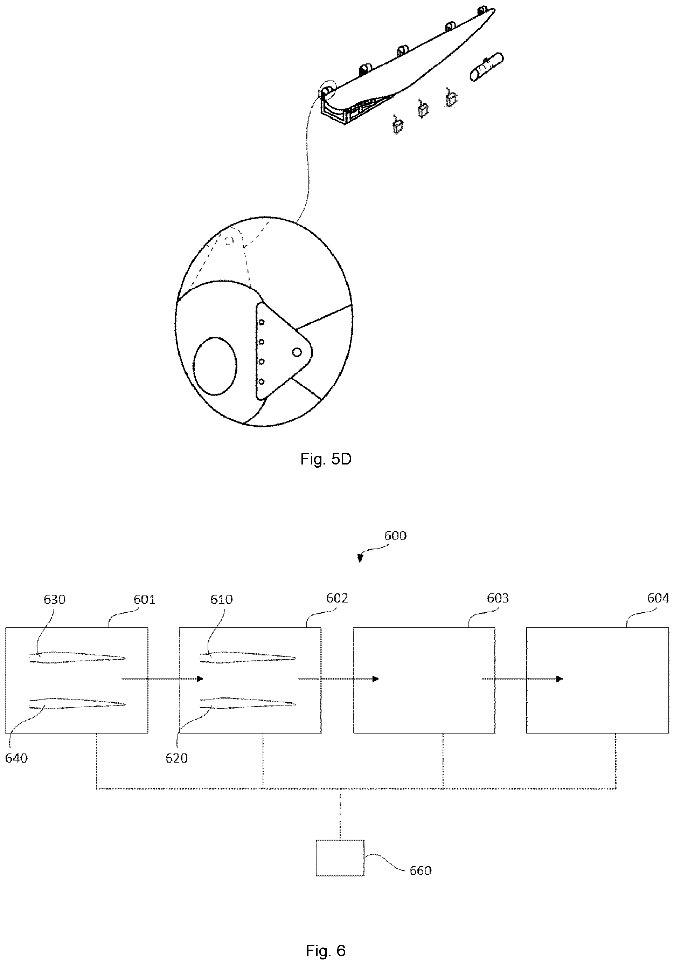

In a further example as shown in figure 5D, a mold having a mold cavity may be provided at a closing workstation of a production line for manufacturing at least part of a wind turbine blade. In some examples, a mold cavity comprising a pressure side of a blade and a mold cavity comprising a suction side of a blade may be provided to the closing workstation. The closing station may be the last station in the production line.

The method for manufacturing a wind turbine blade may therefore further comprise moving the first mold and a second mold having a second mold cavity to the closing workstation.

In the workstation, specialized workers may rework the separate shells. Then, adhesive may be applied to at least one of the two half shells and the two shells may be joined forming a closed mold assembly. In the closing workstation, the first half shell in the first mold may be joined to a second half shell in the second mold by positioning the first and second molds on top of each other such that the mold cavity of the first mold faces the mold cavity of the second mold.

The molds may be coupled to each other with one or more hinges. With the help of a hoisting tool, one of the molds may be lifted and rotated to be placed on top of the other mold.

The closing station may comprise a plurality of closing station sensors which may send the obtained data to the central control system.

In some examples, the closing station sensors may comprise a sensor for determining presence of the first mold and another sensor for determining the presence of the other mold in the closing workstation. In further examples, the closing station sensors may comprise a video camera. In some examples, the sensors may comprise flowmeters e.g. for detecting a flow of the adhesive.

In other examples, a sensor for determining the closure of the molds may be used. The position of the molds may be determined and a precise closure of the two molds may be ensured. E.g. sensors arranged with the hinges may be used to determine the rotating movement of one the molds with respect to the other.

In further examples, the closing station sensors may comprise a pressure sensor. The central control system may detect if there is not enough pressure between the two molds, which may lead to a week bonding between the pressure side and the suction side of the blade and to the obtention of a flawed wind turbine blade. The central control system may adjust the pressure between the molds.

Data obtained from the closing station sensors may also be sent to the central control system, which may determine a deviation and may send control signals to one of the tools of the previous workstations.

In some examples, the method for manufacturing a wind turbine blade may further comprise moving the mold to one or more further workstations prior to a closing station. A plurality of further operations using one or more further tools and further workstations may be carried out to introduce further materials into the mold cavity for manufacturing a first half shell of the wind turbine blade. The mold may then be moved from one of the further workstations to the closing workstation.

The one or more further workstations may comprise workstations other than a gelcoat station, a layup station, and a resin infusion station.

Although not further illustrated, one or more additional workstations may be arranged downstream from the closing workstation. For example, an inspection, or quality monitoring station. This may be an NDT station in some examples. Further workstations may include e.g. workstations for painting, cleaning, repairing and/or finishing.

The one or more further sensors at the further workstations may measure further data indicative of the one or more further operations. The further data may be sent to a central control system and the central control system may determine a deviation in the quality and/or cycle time of one or more of the further operations.

In a further aspect of the present disclosure, a production line 600 for manufacturing at least a part of a wind turbine blade is provided. An example of a production line is schematically shown in figure 6.

The production line 600 comprises a first mold 610 having a first mold cavity; a first workstation 601 including one or more first tools for introducing materials into the first mold cavity and further including one or more sensors for measuring first operations carried out in the first workstation. The production line 600 further comprises a second workstation 602 including one or more second tools for introducing materials into the first mold cavity and further including one or more second sensors for measuring second operations carried out in the second workstation 602. The production line 600 further comprises a conveyor system for moving the first mold 610 from the first workstation 601 to the second workstation 602, and a central control system 660 for carrying out the computer implemented method for controlling a manufacturing method of a wind turbine blade.

As shown in figure 6, the production line 600 from an empty mold to the closing mold workstation may comprise four workstations 601, 602, 603, 604 in this example. Each of the workstations may be prepared to work with at least one mold. In this particular example, each workstation of the production line may be prepared to work with two molds simultaneously, one for the upwind shell and one for the downwind shell. In other examples, downwind shells and upwind shells may be manufactured in different workstations.

The first mold 610 may comprise a first cavity which may be used to manufacture one of the suction side and the pressure side of the wind turbine blade, and the second mold 620 may comprise a second cavity, which may be used to manufacture the other of the pressure side and the suction side of the wind turbine blade. Similar operations may be carried out at each workstation for each mold cavity.

In an example of the present disclosure, a plurality of operations may be carried out to the first and a second mold 610, 620 in the first workstation 601 e.g. a gelcoat station. The conveyor system may move the first and second molds 610, 620 from the first workstation 601 to the second workstation 602 e.g. a fiber lay-up station with a conveying system. Third and fourth molds 630, 640 may be moved to the first workstation 601 once the first and second molds 610, 620 have been conveyed to the second workstation 602.

As shown in figure 6, the production line 600 may further comprise a third workstation 603. The third workstation 603 may include one or more third tools for introducing materials into the first mold cavity and may further include one or more sensors for measuring third operations carried out in the third workstation 603. The production line may further comprise a conveyor system for moving the molds from the second workstation 602 to the third workstation 603. The data measured by the one or more sensors may be sent to the central control system 660.

In some examples, the third workstation 603 may be a resin infusion station, where fibers may be laid in a mold cavity.

The production line 600 may further comprise a fourth workstation 604. In some examples, the fourth workstation 604 may be a closing station. The production line 600 may further comprise a conveyor system for moving the first mold 610 and the second mold 620 having the second mold cavity to the closing workstation.

The closing workstation may comprise tools for joining a first half shell in the first mold to a second half shell in the second mold by positioning the first and second mold on top of each other such that the mold cavity of the first mold faces the second mold cavity. The closing workstation may comprise one or more sensors for measuring closing operations carried out in the closing workstation. The data measured by the one or more sensors may be sent to the central control system 660.

As illustrated in figure 6, the central control system 660 may receive data from the four workstations and may be able to determine a deviation in the quality and/or cycle time of one or more of the operations carried out in the four workstations. Upon detection of a deviation, the central control system 660 may send control signals to one or more of the workstations tools and the line balance of the production line may be maintained.

Although in this example, four different workstations are shown, it will be clear that more or less workstations and different workstations may be provided.

For reasons of completeness, various aspects of the present disclosure are set out in the following numbered clauses:
Clause 1. A computer-implemented method for controlling a manufacturing method of a wind turbine blade, the method comprising:
   receiving first data related to one or more first operations carried out in a first workstation obtained by one or more first sensors arranged with the first workstation;
   receiving second data related to one or more second operations carried out in a second workstation obtained by one or more second sensors arranged with the second workstation;
   analyzing the first and second data to determine a quality and/or a cycle time of one or more of the first and second operations; and
   determining a deviation in the quality and/or cycle time of the one or more of the first and second operations.
Clause 2. The method of clause 1, wherein the first data includes data from first sensors arranged with one or more first tools of the first workstation and/or wherein the second data includes data from second sensors arranged with one or more second tools of the second workstation.
Clause 3. The computer-implemented method of clause 1 or 2, wherein one of the first sensors is a sensor configured to determine the presence of a mold at the first workstation and one of the second sensors is a sensor configured to determine the presence of the mold at the second workstation.
Clause 4. The computer-implemented method of any of clauses 1 - 3, further comprising estimating an overall cycle time of the first workstation, and/or an overall cycle time of the second workstation.
Clause 5. The computer-implemented method of any of clauses 1 - 4, further comprising:
   sending control signals to one or more of the first tools and/or to one or more of the second tools if a deviation in the quality and/or cycle time of the one or more of the first and second operations is detected.
Clause 6. The computer-implemented method of any of clauses 1 - 5, further comprising generating a video signal to a first display capable of reproducing the video signal for providing information regarding progress of the first and/or second operations.
Clause 7. The computer-implemented method of any of clauses 1 - 6, generating an alert when the deviation in the quality and/or cycle time of the one or more operations is determined.
Clause 8. The computer-implemented method of any of clauses 1 - 7, wherein determining a deviation in the quality is determined using a classification model developed using a supervised machine learning method.
Clause 9. The computer-implemented method of any of clauses 1 - 8, further comprising receiving data related to one or more operations carried out in each further workstation of a production line obtained by one or more further sensors arranged in each of the further workstations;
   analyzing the further data to determine a quality and/or a cycle time of one or more of the further operations; and
   determining a deviation in the quality and/or cycle time of the one or more further operations.
Clause 10. A computer program comprising instructions which, when the program is executed by a computer, cause the computer to carry out the method of any of clauses 1 - 9.
Clause 11. A computer-readable medium comprising instructions which, when executed by a computer, cause the computer to carry out the method of any of clauses 1 - 9.
Clause 12. A data processing system comprising a processor configured to perform the method of any of clauses 1 - 9.
Clause 13. A method for manufacturing a wind turbine blade comprising:
   providing a first mold having a first mold cavity at a first workstation;
   carrying out a plurality of first operations using one or more first tools at the first workstation to introduce first materials into the first mold cavity for manufacturing a first half shell of the wind turbine blade;
   moving the first mold to a second workstation;
   carrying out a plurality of second operations using one or more second tools at the second workstation to introduce second materials into the first mold cavity; and wherein
   one or more first sensors at the first workstation measuring first data indicative of the one or more first operations;
   one or more second sensors at the second workstation measuring second data indicative of the one or more second operations;
   sending the first and second data to a central control system; and
   the central control system determining a deviation in the quality and/or cycle time of one or more of the first and second operations.
Clause 14. The method of clause 13, further comprising:
   the central control system estimating an overall cycle time of the first workstation, and/or an overall cycle time of the second workstation.
Clause 15. The method of clause 13 or 14, further comprising:
   the central control system sending control signals to one or more of the first tools and/or to one or more of the second tools if a deviation in the quality and/or cycle time of the one or more of the first and second operations is detected.
Clause 16. The method of any of clauses 13 - 15, further comprising displaying information regarding progress and/or quality of the first and/or second operations.
Clause 17. The method of any of clauses 13 - 16, wherein one of the first or second operations comprises applying gelcoat to an inside of the first mold cavity.
Clause 18. The method of clause 17, wherein a flow sensor is provided for measuring a flowrate of the gelcoat and/or wherein a video camera is provided for recording an image of the inside of the mold cavity.
Clause 19. The method of clause 17 or 18, wherein the central control system changes a hardener ratio of the gelcoat.
Clause 20. The method of any of clauses 13 - 19, wherein one of the first or second operations comprises laying fibers in the first mold cavity.
Clause 21. The method of clause 20, wherein one of the sensors comprises a video camera for imaging the fibers in the mold cavity.
Clause 22. The method of clause 21, wherein the central control system is configured to determine wrinkles in the fibers in the mold cavity.
Clause 23. The method of any of clauses 20 - 22, wherein the fibers are laid in the first mold cavity using a fiber-laying tool, and wherein one of the sensors measures a length of the fibers laid in the mold cavity and/or wherein one of the sensors measures motion of the fiber-laying tool.
Clause 24. The method of any of clauses 20 - 23, wherein one of the operations is infusing the fibers laid in the first mold cavity with a resin.
Clause 25. The method of clause 24, wherein one of the sensors is a video camera for imaging the resin.
Clause 26. The method of clause 24 or 25, wherein one of the sensors is a flow sensor for measuring a flow rate of the resin.
Clause 27. The method of any of clauses 24 - 26, wherein one of the sensors is a reflectance sensor.
Clause 28. The method of any of clauses 24 - 27, further comprising:
   the central control system modifying a hardener ratio in the resin.
Clause 29. The method of any of clauses 13 - 28, further comprising:
   moving the first mold and a second mold having a second mold cavity to a closing workstation;
   joining the first half shell in the first mold, to a second half shell in the second mold by positioning the first and second molds on top of each other such that the mold cavity of the first mold faces the second mold cavity.
Clause 30. The method of clause 29, further comprising:
   moving the first mold to one or more further workstations prior to a closing workstation;
   carrying out a plurality of further operations using one or more further tools at the further workstations to introduce further materials into the first mold cavity for manufacturing a first half shell of the wind turbine blade; and
   moving the first mold from one of the further workstations to the closing workstation.
Clause 31. The method of clause 30, further comprising:
   one or more further sensors at the further workstations measuring further data indicative of the one or more further operations;
   sending the further data to a central control system; and
   the central control system determining a deviation in the quality and/or cycle time of one or more of the further operations.
Clause 32. The method of any of clauses 29 - 31, wherein the closing station comprising a plurality of closing station sensors, and the method further comprising:
   sending data obtained from the closing station sensors to the central control system.
Clause 33. The method of clause 32, wherein the closing station sensors comprise one or more of the following: sensor for determining presence of the first mold in the closing workstation, pressure sensor, sensor for determining closure of the molds, or video camera.
Clause 34. A production line for manufacturing at least a part of a wind turbine blade, comprising:
   a first mold having a first mold cavity;
   a first workstation including one or more first tools for introducing materials into the first mold cavity and further including one or more sensors for measuring first operations carried out in the first workstation;
   a second workstation including one or more second tools for introducing materials into the first mold cavity and further including one or more second sensors for measuring second operations carried out in the second workstation;
   a conveyor system for moving the first mold from the first workstation to the second workstation;
   a central control system for carrying out a method according to any of clauses 1 - 9.
Clause 35. The production line of clause 34, further comprising a third workstation including one or more third tools for introducing materials into the first mold cavity and further including one or more sensors for measuring third operations carried out in the third workstation; and
   a conveyor system for moving the first mold from the second workstation to the third workstation.
Clause 36. The production line of clause 34 or 35, further comprising:
   a closing workstation, and
   a conveyor system for moving the first mold and a second mold having a second mold cavity to the closing workstation; wherein
   the closing workstation comprises tools for joining a first half shell in the first mold to a second half shell in the second mold by positioning the first and second molds on top of each other such that the mold cavity of the first mold faces the second mold cavity.
Clause 37. The production line according to any of clauses 34 - 36, wherein the first workstation is a gelcoat station, wherein one or more of the first tools are configured to deposit gelcoat in the first mold cavity.
Clause 38. The production line according to clause 37, wherein the second workstation is a fiber lay-up station, wherein fibers are laid in the first mold cavity.
Clause 39. The production line according to clause 38, wherein the third workstation is a resin infusion station, wherein the fibers laid in the second workstation are infused with resin.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A computer-implemented method (100) for controlling a manufacturing method of a wind turbine blade, the method comprising:
receiving first data (102) related to one or more first operations carried out in a first workstation obtained by one or more first sensors arranged with the first workstation;
receiving second data (104) related to one or more second operations carried out in a second workstation obtained by one or more second sensors arranged with the second workstation;
analyzing the first and second data (106) to determine a quality and/or a cycle time of one or more of the first and second operations; and
determining (108) a deviation in the quality and/or cycle time of the one or more of the first and second operations.

2. The method of claim 1, wherein the first data includes data from first sensors arranged with one or more first tools of the first workstation and/or wherein the second data includes data from second sensors arranged with one or more second tools of the second workstation.

3. The computer-implemented method of claim 1 or 2, wherein one of the first sensors is a sensor configured to determine the presence of a mold at the first workstation and one of the second sensors is a sensor configured to determine the presence of the mold at the second workstation.

4. The computer-implemented method of any of claims 1 - 3, further comprising estimating an overall cycle time of the first workstation, and/or an overall cycle time of the second workstation.

5. The computer-implemented method of any of claims 1 - 4, further comprising: sending control signals to one or more of the first tools and/or to one or more of the second tools if a deviation in the quality and/or cycle time of the one or more of the first and second operations is detected.

6. The computer-implemented method of any of claims 1 - 5, generating an alert when the deviation in the quality and/or cycle time of the one or more operations is determined.

7. The computer-implemented method of any of claims 1 - 6, further comprising receiving data related to one or more operations carried out in each further workstation of a production line obtained by one or more further sensors arranged in each of the further workstations;
analyzing the further data to determine a quality and/or a cycle time of one or more of the further operations; and
determining a deviation in the quality and/or cycle time of the one or more further operations.

8. A computer program comprising instructions which, when the program is executed by a computer, cause the computer to carry out the method of any of claims 1 - 7.

9. A method (200) for manufacturing a wind turbine blade comprising:
providing a first mold (202) having a first mold cavity at a first workstation;
carrying out a plurality of first operations (204) using one or more first tools at the first workstation to introduce first materials into the first mold cavity for manufacturing a first half shell of the wind turbine blade;
moving (206) the first mold to a second workstation;
carrying out a plurality of second operations (208) using one or more second tools at the second workstation to introduce second materials into the first mold cavity; and wherein
one or more first sensors at the first workstation measuring first data (210) indicative of the one or more first operations;
one or more second sensors at the second workstation measuring second data (212) indicative of the one or more second operations;
sending (214) the first and second data to a central control system; and
the central control system determining a deviation in the quality and/or cycle time of one or more of the first and second operations.

10. The method of claim 9, further comprising:
the central control system estimating an overall cycle time of the first workstation, and/or an overall cycle time of the second workstation.

11. The method of claim 9 or 10, wherein one of the first or second operations comprises applying gelcoat to an inside of the first mold cavity, and optionally wherein a flow sensor is provided for measuring a flowrate of the gelcoat and/or wherein a video camera is provided for recording an image of the inside of the mold cavity.

12. The method of any of claims 9 - 11, wherein one of the first or second operations comprises laying fibers in the first mold cavity, and optionally wherein one of the sensors comprises a video camera for imaging the fibers in the mold cavity.

13. The method of claim 12, wherein the fibers are laid in the first mold cavity using a fiber-laying tool, and wherein one of the sensors measures a length of the fibers laid in the mold cavity and/or wherein one of the sensors measures motion of the fiber-laying tool.

14. The method of any of claims 9 - 13, further comprising:
moving the first mold and a second mold having a second mold cavity to a closing workstation;
joining the first half shell in the first mold, to a second half shell in the second mold by positioning the first and second molds on top of each other such that the mold cavity of the first mold faces the second mold cavity, and optionally wherein
the closing station sensors comprise one or more of the following: sensor for determining presence of the first mold in the closing workstation, pressure sensor, sensor for determining closure of the molds, or video camera.

15. A production line for manufacturing at least a part of a wind turbine blade, comprising:
a first mold having a first mold cavity;
a first workstation including one or more first tools for introducing materials into the first mold cavity and further including one or more sensors for measuring first operations carried out in the first workstation;
a second workstation including one or more second tools for introducing materials into the first mold cavity and further including one or more second sensors for measuring second operations carried out in the second workstation;
a conveyor system for moving the first mold from the first workstation to the second workstation;
a central control system configured to carry out a method according to any of claims 1 - 7.
